(19) Europäisches Patentamt
European Patent Office
Office européen des brevets

(11) EP 4 219 155 A1

(12) EUROPEAN PATENT APPLICATION

(43) Date of publication:
**02.08.2023 Bulletin 2023/31**

(21) Application number: **22382069.7**

(22) Date of filing: **28.01.2022**

(51) International Patent Classification (IPC):
***B32B 27/08*** (2006.01) ***B32B 27/30*** (2006.01)
***B32B 27/32*** (2006.01) ***C08J 5/18*** (2006.01)
***C08L 23/04*** (2006.01)

(52) Cooperative Patent Classification (CPC):
**C08L 23/04; B32B 27/08; B32B 27/30; B32B 27/32; B32B 27/327; C08J 5/18;**
B32B 2250/03; B32B 2250/05; B32B 2250/24; B32B 2250/246; B32B 2270/00; B32B 2272/00; B32B 2307/30; B32B 2307/514; B32B 2307/582;

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dow Global Technologies LLC**
**Midland, MI 48674 (US)**

(72) Inventors:
- **Garg, Akanksha**
**Lake Jackson, 77566 (US)**
- **Parkinson, Shaun**
**43006 Tarragona (ES)**
- **Nieto Palomo, Jesús**
**43006 Tarragona (ES)**
- **El Marrasse Zarioui, Salma**
**43006 Tarragona (ES)**

(74) Representative: **Elzaburu S.L.P.**
**Edificio Torre de Cristal**
**Paseo de la Castellana 259 C, planta 28**
**28046 Madrid (ES)**

# (54) MULTILAYER FILMS COMPRISING ETHYLENE-BASED POLYMERS

(57) Provided are multilayer films including ethylene-based polymers. The multilayer films can be fully compatible with polyethylene recycling streams. The multilayer films include a first outer layer, a second outer layer, and a core, the core including a first core layer that includes an ethylene-propylene copolymer. The multilayer films of the present invention can exhibit improved, maintained, or desirable properties, such as high tear resistance, in comparison to existing multilayer film structures that are not fully compatible with polyethylene recycling streams.

EP 4 219 155 A1

(52) Cooperative Patent Classification (CPC): (Cont.)
B32B 2307/5825; B32B 2307/72; B32B 2307/732;
B32B 2439/06; B32B 2553/00

## Description

### TECHNICAL FIELD

Embodiments of the present disclosure generally relate to multilayer films, and more particularly relate to multilayer films including ethylene-based polymers.

### INTRODUCTION

Multilayer films that incorporate a variety of materials, including polypropylene, polyamide, and polyethylene terephthalate, are widely used in industrial and consumer products. Such films used in industrial and consumer products often require sufficient tear resistance-for example, to avoid the film from breakage during the film wrapping process on a pallet. The combination of layers and materials can allow for good performance of the films, but such multilayer films can be difficult, if not impossible, to recycle together due to the different types of materials that are not recycle-compatible with each other. As demand for sustainable and recyclable materials continues to rise, there remains a need for multilayer films that can be recycled more easily and that exhibit desirable performance properties, such as tear resistance.

### SUMMARY

Embodiments of the present disclosure meet one or more of the foregoing needs by providing multilayer films that exhibit comparable or improved tear resistance and include recycle-compatible ethylene-based polymers. The multilayer films can be fully recycle-compatible in polyethylene recycling streams, and the tear resistance performance of the inventive multilayer layer films can be comparable or better than other multilayer films that do not comprise recycle-compatible polymers. Without being bound by theory, among the other features, the structure of the film, in some embodiments, with a thin first core layer and a specific ethylene-propylene copolymer results in surprisingly desirable tear resistance when compared to existing film structures.

Disclosed herein are multilayer films. In one aspect, the multilayer film comprises a first outer layer, a second outer layer, and a core, the core comprising one or more core layers; wherein the core is positioned between the first outer layer and the second outer layer; wherein the core comprises greater than 90 wt.% ethylene-based polymers, based on the total polymer weight of the core; and wherein a first core layer comprises an ethylene-propylene copolymer comprising 60 to 95 wt.% of ethylene monomer and 5 to 40 wt.% propylene comonomer, the ethylene-propylene copolymer having a density of from 0.865 to 0.920 g/cm$^3$ and a melt index ($I_2$) of at least 0.5 g/10 min, and wherein the core comprises less than 40 wt.% ethylene-propylene copolymer, based on total weight of the core.

These and other embodiments are described in more detail in the Detailed Description.

### BRIEF DESCRIPTION OF THE DRAWINGS

FIG. 1 is a schematic of a single reactor data flow diagram.

FIG. 2 is an ICCD elution profile of Poly. 1 and Poly. 2 (developmental resins described herein).

### DETAILED DESCRIPTION

Aspects of the disclosed multilayer films are described in more detail below. The multilayer films can have a wide variety of applications, including, for example, cast stretch films, blown films, oriented films, stretch hood films, or the like. This disclosure, however, should not be construed to limit the embodiments set forth below as this disclosure is an illustrative implementation of the embodiments described herein.

As used herein, the term "polymer" means a polymeric compound prepared by polymerizing monomers, whether of the same or a different type. The generic term polymer thus embraces the term homopolymer (employed to refer to polymers prepared from only one type of monomer), and the term copolymer. Trace amounts of impurities (for example, catalyst residues) may be incorporated into and/or within the polymer. A polymer may be a single polymer, a polymer blend, or a polymer mixture, including mixtures of polymers that are formed *in situ* during polymerization.

As used herein, the term "copolymer" means a polymer formed by the polymerization reaction of at least two structurally different monomers. The term "copolymer" is inclusive of terpolymers. For example, ethylene copolymers, such as ethylene-propylene copolymers, include at least two structurally different monomers (e.g., ethylene-propylene copolymer includes copolymerized units of at least ethylene monomer and propylene monomer) and can optionally

include additional monomers or functional materials or modifiers, such as acid, acrylate, or anhydride functional groups. Put another way, the copolymers described herein comprise at least two structurally different monomers, and although the copolymers may consist of only two structurally different monomers, they do not necessarily consist of only two structurally different monomers and may include additional monomers or functional materials or modifiers.

As used herein, the terms "polyethylene" or "ethylene-based polymer" shall mean polymers comprising a majority amount (>50 wt.%) of units which have been derived from ethylene monomer. This includes polyethylene homopolymers and copolymers (meaning units derived from two or more comonomers). Unless expressly stated otherwise, the ethylene copolymers disclosed herein (e.g., the ethylene-propylene copolymer described herein) are ethylene-based polymers.

Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); ethylene-based plastomers (POP) and ethylene-based elastomers (POE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.935 g/cm$^3$.

The term "LLDPE", includes both resin made using the traditional Ziegler-Natta catalyst systems and chromium-based catalyst systems as well as single-site catalysts, including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and includes linear, substantially linear or heterogeneous polyethylene copolymers or homopolymers. LLDPEs contain less long chain branching than LDPEs and include the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm$^3$. "MDPE" is typically made using chromium or Ziegler-Natta catalysts or using single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and typically have a molecular weight distribution ("MWD") greater than 2.5.

The term "HDPE" refers to polyethylenes having densities greater than about 0.935 g/cm$^3$ and up to about 0.980 g/cm$^3$, which are generally prepared with Ziegler-Natta catalysts, chrome catalysts or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy).

The term "ULDPE" refers to polyethylenes having densities of 0.855 to 0.912 g/cm$^3$, which are generally prepared with Ziegler-Natta catalysts, chrome catalysts, or single-site catalysts including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy). ULDPEs include, but are not limited to, polyethylene (ethylene-based) plastomers and polyethylene (ethylene-based) elastomers.

As used herein, the term "core layer" refers to a non-skin or non-outer layer of a multilayer film. A core layer is an internal layer, i.e., a layer positioned between two outer layers, of a multilayer film. In one embodiment, a core layer is the non-outer layer of a three-layer film that comprises a first outer layer and a second outer layer. The totality of core layers in the multilayer film of this invention, i.e., one or a plurality, constitute the "core" of the film.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Disclosed herein are multilayer films. In some embodiments, the multilayer film can be an oriented film that is

oriented in the machine and/or cross direction. In some embodiments, the multilayer film is a blown film. In other embodiments, the multilayer film is a cast stretch film. In further embodiments, the multilayer film is a stretch hood film.

The multilayer films according to embodiments disclosed herein comprise a first outer layer, a second outer layer, and a core, the core comprising one or more core layers. The core is positioned between the first outer layer and the second outer layer. The core comprises a first core layer that comprises an ethylene-propylene copolymer.

First Outer Layer and Second Outer Layer of Multilayer Film

The first outer layer and the second outer layer can have the same polymer composition or different polymer composition. In some embodiments, each of the first outer layer and the second outer layer have a thickness that is 10 to 40% of the total thickness of the multilayer film.

In some embodiments, the first outer layer and/or the second outer layer comprise a polyethylene having a density less than 0.930 g/cc and a melt index (12) less than 7 g/10 min. All individual values and subranges of a density less than 0.930 g/cc are disclosed and included herein. For example, the polyethylene of the first outer layer and/or the second outer layer can have a density less than 0.925 g/cc, less than 0.920 g/cc, less than 0.915 g/cc, less than 0.910 g/cc, less than 0.905 g/cc, or less than 0.900 g/cc, or in the range of from 0.865 g/cc to 0.925 g/cc, or 0.875 g/cc to 0.925 g/cc. All individual values and subranges of a melt index (12) less than 7 g/10 min are disclosed and included herein. For example, the polyethylene in the first outer layer and/or second outer layer can have a melt index (12) of less than 6 g/10 min, less than 5 g/10 min, less than 4 g/10 min, less than 3 g/10 min, or less than 2 g/10 min, or in the range of from 0.5 g/10 min to 6 g/10 min, 0.5 g/10 min to 5 g/10 min, or 0.5 g/10 min to 4 g/10 min.

In some embodiments, the first outer layer and/or second outer layer comprise from 70 to 100 wt.% of the polyethylene, based on the total weight of the respective layer. All individual values of from 70 to 100 wt.% are disclosed and included herein. For example, the first outer layer and/or second outer layer can comprise from 70 to 95 wt.%, from 75 to 95 wt.%, from 75 to 90 wt.%, or from 80 to 90 wt.% of the polyethylene.

Commercially available examples of a polyethylene that can be used in the first outer layer and/or the second outer layer include those commercially available from The Dow Chemical Company under the name DOWLEX™, including, for example, DOWLEX™ GM 8090.

In some embodiments, the first outer layer and/or the second outer layer comprise an LDPE. In embodiments where the first outer layer and/or the second outer layer comprise an LDPE, the LDPE can have a density in the range 0.916 to 0.935 g/$cm^3$. All individual values and subranges of 0.916 to 0.935 g/$cm^3$are included and disclosed herein; for example, the density of the LDPE can be from a lower limit of 0.916, 0.918, 0.920, 0.922 g/$cm^3$ to an upper limit of 0.935, 0.933, 0.931 or 0.929 g/$cm^3$.

In embodiments where the first outer layer and/or the second outer layer comprise an LDPE, the LDPE can have a melt index ($I_2$) in the range of from 0.1 g/10 min to 50 g/10 min. All individual values and subranges of from 0.1 g/10 min to 50 g/10 min are disclosed and included herein. For example, the LDPE can have a melt index ($I_2$) in the range of from 0.1 g/10 min to 40 g/10 min, 0.1 g/10 min to 30 g/10 min, 0.1 g/10 min to 20 g/10 min, 0.1 g/10 min to 10 g/10 min, or 0.1 g/10 min to 5 g/10 min.

In some embodiments the first outer layer and/or second outer layer can comprise from 0 to 30 wt.% of the LDPE, based on the total weight of the respective layer. All individual values of 0 to 30 wt.% are disclosed and included herein. For example, the first outer layer and/or the second outer layer can comprise from 5 to 25 wt.%, or from 10 to 20 wt.%, of the LDPE, based on the total weight of the respective layer.

Commercially available examples of LDPEs that can be used in the first outer layer and/or the second outer layer include those commercially available from The Dow Chemical Company under the name DOW™ LDPE 310E.

Core of Multilayer Film

The multilayer film comprises a core. The core comprises one or more core layers and comprises 90 wt.% ethylene-based polymers, including the ethylene-propylene copolymer (described below). The core is positioned between the first outer layer and the second outer layer. The core comprises a first core layer. In some embodiments, the multilayer film disclose herein is a three layer film comprising a first outer layer, a second outer layer, and a core, the core comprising a first core layer. In other embodiments, the multilayer film comprises at least five layers. For example, in some embodiments, the core comprises a first core layer, a second core layer, and a third core layer, wherein the first core layer is positioned between the second core layer and the third core layer, the second core layer is positioned between the first outer layer and the first core layer, and the third core layer is positioned between the first core layer and the second outer layer. In embodiments where the core comprises a first core layer, a second core layer, and a third core layer, the multilayer film comprises at least five layers (e.g., a multilayer film having the structure of first outer layer/second core layer/first core layer/third core layer/second outer layer).

For example, in some embodiments, the multilayer film comprises at least 5 layers including the first outer

layer, the second outer layer, the first core layer, a second core layer, and a third core layer, wherein the first core layer is positioned between the second core layer and the third core layer, and the second core layer and the third core layer comprise, separately, a polyethylene having a density less than 0.930 g/cc and a melt index (12) less than 7 g/10 min.

The core comprises a first core layer. In some embodiments, the first core layer comprises an ethylene-propylene copolymer comprising 60 to 90 wt.% of ethylene monomer and 10 to 40 wt.% of propylene comonomer. In some embodiments, the ethylene-propylene copolymer has a density of from 0.865 to 0.920 g/cc and a melt index (12) of at least 0.5 g/10 min. In some embodiments, the ethylene-propylene copolymer is formed in the presence of a catalyst composition comprising a single-site metallocene catalyst.

In some embodiments, the ethylene-propylene copolymer of the first core layer comprises 60 to 95 wt.% of ethylene monomer and 5 to 40 wt.% of propylene comonomer, based on total weight of the ethylene-propylene copolymer. All individual values and subranges of from 60 to 95 wt.% of ethylene monomer and 5 to 40 wt.% propylene comonomer are disclosed and included herein. For example, the ethylene-propylene copolymer can comprise from 60 to 95 wt.%, from 60 to 90 wt.%, from 70 to 90 wt.%, or 80 to 90 wt.% of ethylene monomer and can comprise from 5 to 40 wt.%, from 10 to 40 wt.%, from 10 to 30 wt.%, or from 10 to 20 wt.%, propylene comonomer. The comonomer content may be measured using any suitable technique, such as techniques based on nuclear magnetic resonance ("NMR") spectroscopy, and, for example, by 13C NMR analysis as described in U.S. Patent 7,498,282, which is incorporated herein by reference.

In some embodiments, the ethylene-propylene copolymer has a density in the range of from 0.865 to 0.920 g/cc. All individual values and subranges of from 0.865 to 0.920 g/cc are disclosed and included herein. For example, the ethylene-propylene copolymer can have a density in the range of from 0.870 to 0.920 g/cc, from 0.880 to 0.910 g/cc, from 0.895 to 0.905 g/cc, or from 0.895 to 0.910 g/cc.

In some embodiments, the ethylene-propylene copolymer has a melt index ($I_2$) of at least 0.5 g/10 min. All individual values and subranges of at least 0.5 g/10 min are disclosed and included herein. For example, the ethylene-propylene copolymer can have a melt index ($I_2$) of at least 0.5 g/10 min, at least 0.6 g/10 min, at least 0.7 g/10 min, at least 0.8 g/10 min, at least 0.9 g/10 min, or at least 1.0 g/10 min, or can have a melt index ($I_2$) in the range of from 0.5 g/10 min to 500 g/10 min, from 0.5 g/10 min to 200 g/10 min, from 0.5 g/10 min to 100 g/10 min, from 0.5 g/10 min to 50 g/10 min, from 0.5 g/10 min to 10 g/10 min, or from 0.5 g/10 min to 8 g/10 min.

In some embodiments, the ethylene-propylene copolymer has a single peak in an improved comonomer composition distribution (ICCD) elution profile between a temperature range of from 40 to 100°C. The improved comonomer composition distribution (ICCD) profile of the ethylene-propylene copolymer can be obtained via the test method described below.

In some embodiments, the ethylene-propylene copolymer has a molecular weight distribution (Mw/Mn) in the range of from 1.5 to 5.0. All individual value and subrange of from 1.5 to 5.0 are disclosed and included herein. For example, the ethylene-propylene copolymer can have a molecular weight distribution (Mw/Mn) in the range of from 1.5 to 5.0, from 1.6 to 5.0, from 1.8 to 5.0, from 2.0 to 5.0, from 1.5 to 4.0, from 1.6 to 4.0, from 1.8 to 4.0, from 2.0 to 4.0, from 1.5 to 3.0, from 1.8 to 3.0, from 2.0 to 3.0, from 1.5 to 2.5, from 1.8 to 2.5, or from 2.0 to 2.5. Molecular weight distribution (Mw/Mn) can be measured in accordance with the GPC test method described below.

In some embodiments, the ethylene-propylene copolymer is further characterized by having a melt flow ratio ($I_{10}/I_2$) of from 5 to 14. All individual values and subranges of from 5 to 14 are disclosed and included herein. For example, the ethylene-propylene copolymer can have a melt flow ratio ($I_{10}/I_2$) of from 5 to 14, from 6 to 12, from 6 to 10, or from 5 to 10.

In some embodiments, the ethylene-propylene copolymer has a heat of fusion in the range of from 40 to 150 J/g. All individual values and subranges of from 40 to 150 J/g are disclosed and included herein. For example, the ethylene-propylene copolymer can have a heat of fusion in the range of from 40 to 110 J/g to 150 J/g, from 45 to 130 J/g, from 50 to 120 J/g, from 60 to 110 J/g, from 70 to 110 J/g, from 80 to 110 J/g, from 90 to 110 J/g, where heat of fusion is measured in accordance with the DSC test method described below.

In some embodiments, the first core layer comprises from 60 to 100 wt.%, based on total weight of the first core layer, of the ethylene-propylene copolymer. All individual values and subranges of from 60 to 100 wt.% are disclosed and included herein. For example, the first core layer can comprise from 65 to 100 wt.%, from 75 to 95 wt.%, from 80 to 90 wt.%, or from 90 to 100 wt.%, of the ethylene-propylene copolymer, where weight percent (wt.%) is based on total weight of the first core layer.

In some embodiments, in addition to the ethylene-propylene copolymer, the first core layer can comprise from 0 to 40 wt.% or 5 to 20 wt.%, based on total weight of the first core layer, of an ethylene-based polymer such as an ULDPE, LLDPE, LDPE, MDPE, or HDPE. For example, in some embodiments, the first core layer comprises from 5 to 20 wt.% of a polyethylene resin, where weight percent is based on total weight of the first core layer.

In embodiments where the first core layer comprises a polyethylene resin, the polyethylene resin can have a density less than or equal to 0.930 g/cm$^3$. All individual values and subranges less than or equal to 0.930 g/cm$^3$ are included and disclosed herein; for example, the density of the linear low density polyethylene can be from a lower limit of 0.870 g/cm$^3$ to an upper limit of 0.928, 0.925, 0.920 or 0.915 g/cm$^3$. All individual values and subranges between

0.870 and 0.930 g/cm$^3$ are included and disclosed herein.

In some embodiments, the second core layer and/or the third core layer have the same polymer composition as the first core layer. In other embodiments, the second core layer and/or the third core layer have a different polymer composition than the first core layer. For example, in some embodiments, the third core layer also comprises an ethylene-propylene copolymer. That is, in some embodiments, the third core layer comprises an ethylene-propylene copolymer comprising 60 to 90 wt.% of ethylene monomer and 10 to 40 wt.% of propylene comonomer. In such embodiments, the third core layer can have the same polymeric composition as the first core layer, and the ethylene-propylene copolymer of the third core layer can have the same characteristics as the ethylene-propylene copolymer of the first core layer (described above).

In some embodiments, a thickness of the first core layer is less than 30% of a total thickness of the multilayer film. All individual value and subranges of less than 30% are disclosed and included herein. For example, a thickness of the first core layer can be less than 25%, less than 20%, less than 15%, less than 10%, less than 5% of a total thickness of the multilayer film; or for example, the first core layer can comprise from 2 to 30% of the total thickness of the multilayer films, or from 8 to 25% of the total thickness of the multilayer film.

In some embodiments, the core of the multilayer film comprises 90 wt.% ethylene-based polymer, or 95 wt.%, ethylene-based polymer, or 100 wt.%, ethylene-based polymer, based on the total weight of the core.

In some embodiments, the core of the multilayer film comprises less than 40 wt.% ethylene-propylene copolymer, based on the total weight of the core. All individual values and subranges of less than 40 wt.%, are disclosure and included herein. For example, the core can comprise less than 35 wt.%, less than 30 wt.%, less than 25 wt.%, less than 20 wt.%, or less than 15 wt.%, ethylene-propylene copolymer, based on the weight of the core.

Additives

It should be understood that any of the foregoing layers can further comprise one or more additives as known to those of skill in the art such as, for example, antioxidants, ultraviolet light stabilizers, thermal stabilizers, slip agents, antiblock agents, antistatic agents, pigments or colorants, processing aids, crosslinking catalysts, flame retardants, fillers and foaming agents. For example, in some embodiments, the first outer layer and the second outer layer each comprise an antiblock agent.

Multilayer Films

Multilayer films disclosed herein can be produced using techniques known to those of skill in the art based on the teachings herein. For example, the multilayer film may be produced by coextrusion. The formation of coextruded multilayer films is known in the art and applicable to the present disclosure. Coextrusion systems for making multilayer films employ at least two extruders feeding a common die assembly. The number of extruders is dependent upon the number of different materials or polymers comprising the coextruded film. For example, a five-layer coextrusion may require up to five extruders although less may be used if two or more of the layers are made of the same materials or polymers.

The multilayer film of the present invention, in various embodiments, can have several desirable properties. Without being bound by any theory, the specific structure of the multilayer film (e.g., a core comprising less than 40 wt.% ethylene-propylene copolymer), along with the inclusion of the specific ethylene-propylene copolymer in the core, can result in the multilayer film having desirable tear resistance properties. In some embodiments, the multilayer film exhibits cross direction tear resistance, where the thickness of the multilayer film is 100 μm, of at least 1500 g, (or at least 1600 g, or at least 1700 g, or at least 1800 g), or in the range of from 1500 g to 3500 g, from 1600 g to 3500 g, from 1700 g to 3500 g, or from 1800 g to 3500 g. Cross direction tear resistance can be expressed in grams per micrometer thickness of the multilayer film. For example, in some embodiments, the multilayer film can exhibit cross direction tear resistance of at least 16.66 g/μm (or at least 20 g/μm, or at least 23.33 g/μm, or at least 26.66 g/μm), or in the range of from 16.66 g/μm to 33.33 g/μm, from 20 g/μm to 33.33 g/μm, from 23.33 g/μm to 33.33 g/μm, or from 26.66 g/μm to 33.33 g/μm. Cross direction tear resistance can be measured in accordance with ASTM D1922-09.

In some embodiments, the multilayer film has a thickness between 6 and 150 microns (μm), or alternatively between 6 and 100 microns, or alternatively between 6 and 50 microns.

In some embodiments, the multilayer film of the present invention comprises at least 90 wt.% ethylene-based polymer, or at least 95 wt.% ethylene-based polymer, or at least 99 wt.% ethylene-based polymer, or at least 99.5 wt.% ethylene-based polymer, or at least 99.9 wt.% ethylene-based polymer, based on the overall weight of the multilayer film. Because the multilayer films in some embodiments comprise at least 90 wt.% ethylene-based polymer, they can be compatible with polyethylene recycling streams.

In some embodiments, the multilayer film is a machine direction oriented film. In other embodiments, the multilayer film is a cast stretch film. In further embodiments, the multilayer is a blown film.

Articles

Embodiments of the present invention also provide articles including any of the inventive multilayer films described herein. Examples of such articles can include wraps, packages, flexible packages, pouches, and sachets. Articles of the present invention can be formed from the multilayer films disclosed herein using techniques known to those of skill in the art in view of the teachings herein.

## TEST METHODS

Density

Density is measured in accordance with ASTM D792, and expressed in grams/$cm^3$ (g/$cm^3$ or g/cc).

Melt Indices ($I_2$ and $I_{10}$)

Melt index ($I_2$) is measured in accordance with ASTM D-1238 at 190°C at 2.16 kg. Melt index ($I_{10}$) is measured in accordance with ASTM D-1238 at 190°C at 10 kg The values for melt indices are reported in g/10 min, which corresponds to grams eluted per 10 minutes. Melt flow rate is $I_{10}/I_2$.

Improved Comonomer Composition Distribution (ICCD)

Improved method for comonomer content analysis (iCCD) was developed in 2015 (Cong and Parrott et al., WO2017040127A1). iCCD test was performed with Crystallization Elution Fractionation instrumentation (CEF) (PolymerChar, Spain) equipped with IR-5 detector (PolymerChar, Spain) and two angle light scattering detector Model 2040 (Precision Detectors, currently Agilent Technologies). A guard column packed with 20-27 micron glass (MoSCi Corporation, USA) in a 5 cm or 10 cm (length)X1/4" (ID) stainless was installed just before IR-5 detector in the detector oven. Ortho-dichlorobenzene (ODCB, 99% anhydrous grade or technical grade) was used. Silica gel 40 (particle size 0.2-0.5 mm, catalogue number 10181-3) from EMD Chemicals was obtained (can be used to dry ODCB solvent before). Dried silica was packed into three emptied HT-GPC columns to further purify ODCB as eluent. The CEF instrument is equipped with an autosampler with N2 purging capability. ODCB is sparged with dried nitrogen (N2) for one hour before use. Sample preparation was done with autosampler at 4 mg/ml (unless otherwise specified) under shaking at 160°C for 1 hour. The injection volume was 300μl. The temperature profile of iCCD was: crystallization at 3°C/min from 105°C to 30°C, the thermal equilibrium at 30°C for 2 minute (including Soluble Fraction Elution Time being set as 2 minutes), elution at 3°C/min from 30°C to 140°C. The flow rate during crystallization is 0.0 ml/min. The flow rate during elution is 0.50 ml/min. The data was collected at one data point/second.

The iCCD column was packed with gold coated nickel particles (Bright 7GNM8-NiS, Nippon Chemical Industrial Co.) in a 15cm (length)X1/4" (ID) stainless tubing. The column packing and conditioning were with a slurry method according to the reference (Cong, R.; Parrott, A.; Hollis, C.; Cheatham, M. WO2017040127A1). The final pressure with TCB slurry packing was 150 Bars.

Column temperature calibration was performed by using a mixture of the Reference Material Linear homopolymer polyethylene (having zero comonomer content, Melt index ($I_2$) of 1.0, polydispersity $M_w/M_n$ approximately 2.6 by conventional gel permeation chromatography, 1.0mg/ml) and Eicosane (2mg/ml) in ODCB. iCCD temperature calibration consisted of four steps: (1) Calculating the delay volume defined as the temperature offset between the measured peak elution temperature of Eicosane minus 30.00° C; (2) Subtracting the temperature offset of the elution temperature from iCCD raw temperature data. It is noted that this temperature offset is a function of experimental conditions, such as elution temperature, elution flow rate, etc.; (3) Creating a linear calibration line transforming the elution temperature across a range of 30.00° C and 140.00° C so that the linear homopolymer polyethylene reference had a peak temperature at 101.0°C, and Eicosane had a peak temperature of 30.0° C; (4) For the soluble fraction measured isothermally at 30° C, the elution temperature below 30.0° C is extrapolated linearly by using the elution heating rate of 3° C/min according to the reference (Cerk and Cong et al., US9,688,795).

The comonomer content versus elution temperature of iCCD was constructed by using 12 reference materials (ethylene homopolymer and ethylene-octene random copolymer made with single site metallocene catalyst, having ethylene equivalent weight average molecular weight ranging from 35,000 to 128,000). All of these reference materials were analyzed same way as specified previously at 4 mg/mL. The reported elution peak temperatures followed the figure of octene mole% versus elution temperature of iCCD at $R^2$ of 0.978.

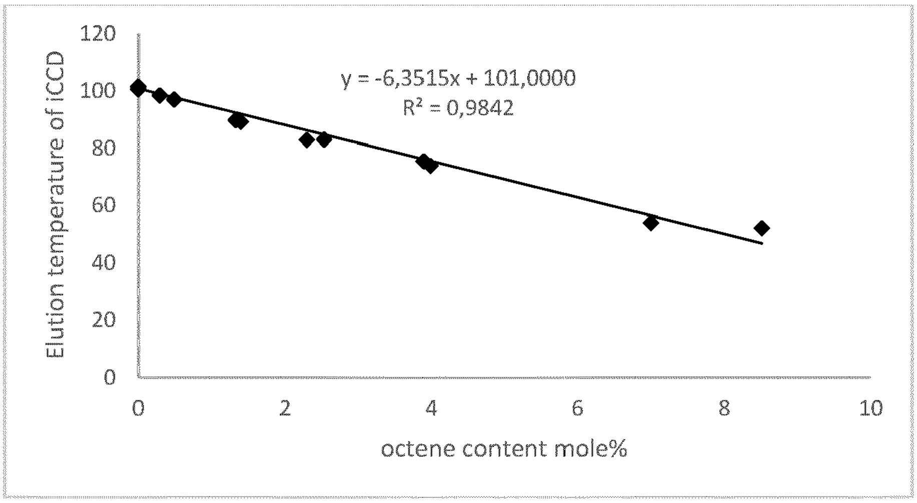


Molecular weight of polymer and the molecular weight of the polymer fractions was determined directly from LS detector (90 degree angle) and concentration detector (IR-5) according Rayleigh-Gans-Debys approximation (Striegel and Yau, Modern Size Exclusion Liquid Chromatogram, Page 242 and Page 263) by assuming the form factor of 1 and all the virial coefficients equal to zero. Integration windows are set to integrate all the chromatograms in the elution temperature (temperature calibration is specified above) range from 23.0 to 120°C.

The calculation of Molecular Weight (Mw) from iCCD includes the following steps: (1) Measuring the interdetector offset. The offset is defined as the geometric volume offset between LS with respect to concentration detector. It is calculated as the difference in the elution volume (mL) of polymer peak between concentration detector and LS chromatograms. It is converted to the temperature offset by using elution thermal rate and elution flow rate. A linear high density polyethylene (having zero comonomer content, Melt index ($I_2$) of 1.0, polydispersity $M_w/M_n$ approximately 2.6 by conventional gel permeation chromatography) is used. Same experimental conditions as the normal iCCD method above are used except the following parameters: crystallization at 10°C/min from 140°C to 137°C, the thermal equilibrium at 137°C for 1 minute as Soluble Fraction Elution Time, soluble fraction (SF) time of 7 minutes, elution at 3°C/min from 137°C to 142°C. The flow rate during crystallization is 0.0 ml/min. The flow rate during elution is 0.80 ml/min. Sample concentration is 1.0mg/ml. (2) Each LS datapoint in LS chromatogram is shifted to correct for the interdetector offset before integration. (3) Baseline subtracted LS and concentration chromatograms are integrated for the whole eluting temperature range of the Step (1). The MW detector constant is calculated by using a known MW HDPE sample in the range of 100,000 to 140,000Mw and the area ratio of the LS and concentration integrated signals. (4) Mw of the polymer was calculated by using the ratio of integrated light scattering detector (90 degree angle) to the concentration detector and using the MW detector constant.

Conventional GPC (Mw/Mn)

The chromatographic system consisted of a PolymerChar GPC-IR (Valencia, Spain) high temperature GPC chromatograph equipped with an internal IR5 infra-red detector (IR5) coupled to a Precision Detectors (Now Agilent Technologies) 2-angle laser light scattering (LS) detector Model 2040. For all Light scattering measurements, the 15 degree angle is used for measurement purposes. The autosampler oven compartment was set at 160° Celsius and the column compartment was set at 150° Celsius. The columns used were 4 Agilent "Mixed A" 30cm 20-micron linear mixed-bed columns. The chromatographic solvent used was 1,2,4 trichlorobenzene and contained 200 ppm of butylated hydroxytoluene (BHT). The solvent source was nitrogen sparged. The injection volume used was 200 microliters and the flow rate was 1.0 milliliters/minute.

Calibration of the GPC column set was performed with 21 narrow molecular weight distribution polystyrene standards with molecular weights ranging from 580 to 8,400,000 and were arranged in 6 "cocktail" mixtures with at least a decade of separation between individual molecular weights. The standards were purchased from Agilent Technologies. The polystyrene standards were prepared at 0.025 grams in 50 milliliters of solvent for molecular weights equal to or greater than 1,000,000, and 0.05 grams in 50 milliliters of solvent for molecular weights less than 1,000,000. The polystyrene standards were dissolved at 80 degrees Celsius with gentle agitation for 30 minutes. The polystyrene standard peak molecular weights were converted to polyethylene molecular weights using Equation 1 (as described in Williams and Ward, J. Polym. Sci., Polym. Let., 6, 621 (1968)).:

$$M_{polyethylene} = A \times (M_{polystyrene})^B \quad \text{(EQ1)}$$

where M is the molecular weight, A has a value of 0.4315 and B is equal to 1.0

A fifth order polynomial was used to fit the respective polyethylene-equivalent calibration points. A small adjustment to A (from approximately 0.415 to 0.44) was made to correct for column resolution and band-broadening effects such that NIST standard NBS 1475 is obtained at 52,000Mw.

The total plate count of the GPC column set was performed with Eicosane (prepared at 0.04 g in 50 milliliters of TCB and dissolved for 20 minutes with gentle agitation.) The plate count (Equation 2) and symmetry (Equation 3) were measured on a 200 microliter injection according to the following equations:

$$Plate\ Count = 5.54 * \left(\frac{(\mathrm{RV_{Peak\ Max}}}{Peak\ Width\ at\ \frac{1}{2}height}\right)^2 \quad \text{(EQ2)}$$

where RV is the retention volume in milliliters, the peak width is in milliliters, the peak max is the maximum height of the peak, and ½ height is ½ height of the peak maximum.

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \quad \text{(EQ3)}$$

where RV is the retention volume in milliliters and the peak width is in milliliters, Peak max is the maximum position of the peak, one tenth height is 1/10 height of the peak maximum, and where rear peak refers to the peak tail at later retention volumes than the peak max and where front peak refers to the peak front at earlier retention volumes than the peak max. The plate count for the chromatographic system should be greater than 24,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200ppm BHT) was added to a pre nitrogen-sparged septa-capped vial, via the PolymerChar high temperature autosampler. The samples were dissolved for 2 hours at 160° Celsius under "low speed" shaking.

The calculations of $Mn_{(GPC)}$, $Mw_{(GPC)}$, and $Mz_{(GPC)}$ were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1.

$$Mn_{(GPC)} = \frac{\sum^{i} IR_i}{\sum^{i}\left(IR_i / M_{polyethylene_i}\right)} \quad \text{(EQ 4)}$$

$$Mw_{(GPC)} = \frac{\sum^{i}\left(IR_i * M_{polyethylene_i}\right)}{\sum^{i} IR_i} \quad \text{(EQ 5)}$$

$$Mz_{(GPC)} = \frac{\sum^{i}\left(IR_i * M_{polyethylene_i}{}^2\right)}{\sum^{i}\left(IR_i * M_{polyethylene_i}\right)} \qquad \text{(EQ 6)}$$

In order to monitor the deviations over time, a flowrate marker (decane) was introduced into each sample via a micropump controlled with the PolymerChar GPC-IR system. This flowrate marker (FM) was used to linearly correct the pump flowrate (Flowrate(nominal)) for each sample by RV alignment of the respective decane peak within the sample (RV(FM Sample)) to that of the decane peak within the narrow standards calibration (RV(FM Calibrated)). Any changes in the time of the decane marker peak are then assumed to be related to a linear-shift in flowrate (Flowrate(effective)) for the entire run. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (with respect to the narrow standards calibration) is calculated as Equation 7. Processing of the flow marker peak was done via the PolymerChar GPCOne™ Software. Acceptable flowrate correction is such that the effective flowrate should be within +/-2% of the nominal flowrate.

$$\text{Flowrate}_{(effective)} = \text{Flowrate}_{(nominal)} * (\text{RV}_{(FM\ Calibrated)} / \text{RV}_{(FM\ Sample)}) \qquad \text{(EQ7)}$$

The Systematic Approach for the determination of multi-detector offsets is done in a manner consistent with that published by Balke, Mourey, et. al. (Mourey and Balke, Chromatography Polym. Chpt 12, (1992)) (Balke, Thitiratsakul, Lew, Cheung, Mourey, Chromatography Polym. Chpt 13, (1992)), optimizing triple detector log (MW and IV) results from a broad homopolymer polyethylene standard (Mw/Mn > 3) to the narrow standard column calibration results from the narrow standards calibration curve using PolymerChar GPCOne™ Software.

The absolute molecular weight data was obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)) using PolymerChar GPCOne™ software. The overall injected concentration, used in the determination of the molecular weight, was obtained from the mass detector area and the mass detector constant, derived from a suitable linear polyethylene homopolymer, or one of the polyethylene standards of known weight-average molecular weight. The calculated molecular weights (using GPCOne™) were obtained using a light scattering constant, derived from one or more of the polyethylene standards mentioned below, and a refractive index concentration coefficient, dn/dc, of 0.104. Generally, the mass detector response (IR5) and the light scattering constant (determined using GPCOne™) should be determined from a linear standard with a molecular weight in excess of about 50,000 g/mole. Other respective moments, Mn(Abs) and Mz(Abs) are be calculated according to equations 8-9 as follows:

$$Mn_{(Abs)} = \frac{\sum^{i} IR_i}{\sum^{i}\left(IR_i / M_{Absolute_i}\right)} \qquad \text{(EQ 8)}$$

$$Mz_{(Abs)} = \frac{\sum^{i}\left(IR_i * M_{Absolute_i}{}^2\right)}{\sum^{i}\left(IR_i * M_{Absolute_i}\right)} \qquad \text{(EQ 9)}$$

**IR5 GPC Composition Calibration**

A calibration for the IR5 detector rationing was performed using at least ten ethylene-based polymer standards

(polyethylene homopolymer and ethylene/octene copolymers) of known short chain branching (SCB) frequency (measured by the $^{13}C$ NMR Method), ranging from homopolymer (0 SCB/1000 total C) to approximately 50 SCB/1000 total C, where total C = carbons in backbone + carbons in branches. Each standard had a weight-average molecular weight from 36,000 g/mole to 126,000 g/mole, as determined by the GPC-LALLS. Each standard had a molecular weight distribution (Mw/Mn) from 2.0 to 2.5, as determined by GPC. Example polymer properties for the Copolymer standards are shown in Table A

Table A: "Copolymer" Standards

| Wt % Comonomer | IR5 Area ratio | SCB / 1000 Total C | Mw | Mw/Mn |
|---|---|---|---|---|
| 23.1 | 0.2411 | 28.9 | 37,300 | 2.22 |
| 14.0 | 0.2152 | 17.5 | 36,000 | 2.19 |
| 0.0 | 0.1809 | 0.0 | 38,400 | 2.20 |
| 35.9 | 0.2708 | 44.9 | 42,200 | 2.18 |
| 5.4 | 0.1959 | 6.8 | 37,400 | 2.16 |
| 8.6 | 0.2043 | 10.8 | 36,800 | 2.20 |
| 39.2 | 0.2770 | 49.0 | 125,600 | 2.22 |
| 1.1 | 0.1810 | 1.4 | 107,000 | 2.09 |
| 14.3 | 0.2161 | 17.9 | 103,600 | 2.20 |
| 9.4 | 0.2031 | 11.8 | 103,200 | 2.26 |

The "IR5 Area Ratio (or "IR5 Methyl Channel Area / IR5 Measurement Channel Area")" of "the baseline-subtracted area response of the IR5 methyl channel sensor" to "the baseline-subtracted area response of IR5 measurement channel sensor" (standard filters and filter wheel as supplied by PolymerChar: Part Number IR5_FWM01 included as part of the GPC-IR instrument) was calculated for each of the "Copolymer" standards. A linear fit of the Wt%

Comonomer frequency versus the "IR5 Area Ratio" was constructed in the form of the following Equation 10:

$$\text{Wt\% Comonomer} = A_0 + [A_1 \times (\text{IR5}_{\text{Methyl Channel Area}} / \text{IR5}_{\text{Measurement Channel Area}})] \quad \text{(Eqn. 10)}$$

End-Group Correction of the wt% Comonomer data can be made via knowledge of the termination mechanism if there is significant spectral overlap with the comonomer termination (methyls) via the molecular weight determined at each chromatographic slice.

DSC Method - Heat of Fusion

Differential scanning calorimetry is a common technique that can be used to examine the melting and crystallization of semi-crystalline polymers. General principles of DSC measurements and applications of DSC to studying semi-crystalline polymers are described in standard texts (e.g., E. A. Turi, ed., Thermal Characterization of Polymeric Materials, Academic Press, 1981).

The Heat of Fusion is determined using DSC from TA Instruments, Inc. The test is conducted in reference to ASTM standard D3428. The calibration is performed by preparing 2-3 mg of indium and placing it in a T-zero aluminum pan. The pan is then loaded into the DSC instrument and subjected to the following heating program cycle: 1) equilibrate test chamber at 180°C, 2) hold temperature at 180 °C for 1 min., 3) ramp temperature down to 130 °C at 10 °C/min., 4) hold temperature at 130°C for 3 min., and 5) ramp temperature at 10 °C/min. to 180 °C. Once completed, the last heat curve conducted in step 5 is analyzed to determine the melting temperature of the indium sample. The DSC is considered to be working in compliance should the melting temperature be within a 0.5°C tolerance of 156.6 °C.

For sample testing, the polymer samples are first pressed into a thin film at a temperature of 190°C. About 4 to 5 mg of sample is weighed out and placed in the DSC pan. The lid is crimped on the pan to ensure a closed atmosphere. The sample pan is placed in the DSC cell and is equilibrated at 180°C. The sample is kept at this temperature for 5 minutes. Then the sample is cooled at a rate of 10°C/min to -90°C and kept isothermally at that temperature for 5 minutes.

Subsequently, the sample is heated at a rate of 10°C/min to 150°C (to ensure complete melting); this step is designated as the 2nd heating curve. The resulting enthalpy curves are analyzed for peak melt temperature, onset and peak crystallization temperatures, and the heat of fusion (also known as heat of melting), ΔHf. The heat of fusion, in Joules/gram, is measured from the 2nd heating curve by performing a linear integration of the melting endotherm in accordance to the baseline

Tear Resistance in Cross Direction (CD)

Tear resistance of the example multilayer films is measured in the cross direction (CD) in accordance with ASTM D1922-09. The ASTM D1922-09 standard determines the average force to propagate tearing in the cross direction through a specified length of plastic film after the tear has been started.

## EXAMPLES

The following materials are included in the example multilayer films discussed below.

Synthesis of Ethylene-Propylene Copolymer - Poly 1

A development resin (herein referred to as "Poly. 1") is prepared according to the following process and tables.

All raw materials (monomer and comonomer) and the process solvent (a narrow boiling range high-purity isoparaffinic solvent, Isopar-E) are purified with molecular sieves before introduction into the reaction environment. Hydrogen is supplied pressurized as a high purity grade and is not further purified. The reactor monomer feed stream is pressurized via a mechanical compressor to above reaction pressure. The solvent and comonomer (if present) feed is pressurized via a pump to above reaction pressure. The individual catalyst components are manually batch diluted with purified solvent and pressured to above reaction pressure. All reaction feed flows are measured with mass flow meters and independently controlled with computer automated valve control systems. Reactor configuration is single reactor operation as specified in Table B.

The reactor is a continuous solution polymerization reactor consisting of a liquid full, non-adiabatic, isothermal, circulating, loop reactor or a continuously stirred tank reactor (CSTR) with heat removal. Independent control of all fresh solvent, monomer, comonomer (if present), hydrogen, and catalyst component feeds is possible. The total fresh feed stream to the reactor (solvent, monomer, comonomer [if present], and hydrogen) is temperature controlled typically between 15-50°C to maintain a single solution phase by passing the feed stream through a heat exchanger. In case of a CSTR the total fresh feed to the polymerization reactor is injected into the bottom of the reactor. In case of a circulating loop reactor the total fresh feed to the polymerization reactor is injected into the reactor at two locations with approximately equal reactor volumes between each injection location. The fresh feed is controlled with each injector receiving half of the total fresh feed mass flow. The catalyst components are injected into the polymerization reactor through one or multiple injection nozzles to introduce the components into the center of the reactor flow. The catalyst component feed is computer controlled to maintain the reactor monomer conversion at the specified values. The cocatalyst component(s) is/are fed based on calculated specified molar ratios to the primary catalyst component. Immediately following each reactor feed injection location, the feed streams are mixed with the circulating polymerization reactor contents with static mixing elements. In case of a CSTR the heat of reaction is partly removed by a cooled jacket. The temperature of the coolant side is responsible for maintaining an isothermal reaction environment at the specified temperature. In case of a circulating loop reactor the contents is continuously circulated through heat exchangers responsible for removing much of the heat of reaction and with the temperature of the coolant side responsible for maintaining an isothermal reaction environment at the specified temperature. Circulation around the reactor loop is provided by a pump.

The reactor effluent enters a zone where it is deactivated with the addition of and reaction with a suitable reagent (water). At this same reactor exit location other additives are added for polymer stabilization (typical antioxidants suitable for stabilization during extrusion and fabrication like Octadecyl 3,5-Di-Tert-Butyl-4-Hydroxyhydrocinnamate, Tetrakis(Methylene(3,5-Di-Tert-Butyl-4-Hydroxyhydrocinnamate))Methane, and Tris(2,4-Di-Tert-Butyl-Phenyl) Phosphite and acid scavenging agents like calcium stearate if needed).

Following catalyst deactivation and additive addition, the reactor effluent enters a devolatization system where the polymer is removed from the non-polymer stream. The isolated polymer melt is pelletized and collected. The non-polymer stream passes through various pieces of equipment which separate most of the ethylene which is removed from the system. Depending on the reactor set-up none or most of the solvent and unreacted comonomer (if present) is recycled back to the reactor after passing through a purification system. A small amount of solvent and comonomer (if present) is purged from the process.

The reactor stream feed data flows that correspond to the values in Table B used to produce the developmental resin, Poly. 1, are graphically described in Figure 1. The data are presented for a reactor set-up without the solvent

recycle system is and the reaction system can be treated as a once through flow diagram.

**Table A - Catalyst Components**

| | |
|---|---|
| Primary Catalyst | 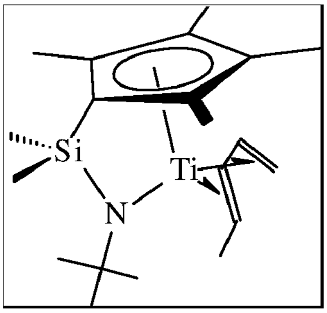 |
| Co-catalyst A | Borane, tris(2,3,4,5,6-pentafluorophenyl) |
| Co-catalyst B | Aluminoxanes, iso-Bu Me, branched, cyclic and linear; modified methyl aluminoxane |

**Table B - Reactor Information**

| | | **Poly 1** |
|---|---|---|
| Reactor Configuration | Type | Single |
| Comonomer type | Type | propylene |
| First Reactor Feed Solvent / Ethylene Mass Flow Ratio | g/g | 9.6 |
| First Reactor Feed Comonomer / Ethylene Mass Flow Ratio | g/g | 0.4 |
| First Reactor Feed Hydrogen / Ethylene Mass Flow Ratio | g/g | 3.6E-05 |
| First Reactor Temperature | °C | 90.5 |
| First Reactor Pressure | barg | 28.0 |
| First Reactor Ethylene Conversion | % | 79.8 |
| First Reactor Catalyst Type | Type | Primary catalyst component 1 |
| First Reactor Co-Catalyst 1 Type | Type | Co-catalyst A |
| First Reactor Co-Catalyst 2 Type | Type | Co-catalyst B |
| First Reactor Co-Catalyst 1 to Catalyst Molar Ratio (B to Catalyst Metal ratio) | mol/mol | 3 (B/Ti) |
| First Reactor Co-Catalyst 2 to Catalyst Molar Ratio (Al to Catalyst Metal ratio) | mol/mol | 3.34 (Al/Ti) |
| First Reactor Residence Time | min | 4.3 |

Synthesis of Ethylene-Propylene Copolymer - Poly 2

A development resin (herein referred to as "Poly. 2") is prepared according to the following process and tables.

All raw materials (monomer and comonomer) and the process solvent (a narrow boiling range high-purity isoparaffinic solvent, Isopar-E) are purified with molecular sieves before introduction into the reaction environment. Hydrogen is supplied pressurized as a high purity grade and is not further purified. The reactor monomer feed stream is pressurized via a mechanical compressor to above reaction pressure. The solvent and comonomer (if present) feed is pressurized via a pump to above reaction pressure. The individual catalyst components are manually batch diluted with purified solvent and pressured to above reaction pressure. All reaction feed flows are measured with mass flow meters and independently controlled with computer automated valve control systems. Reactor configuration is single reactor operation as specified in Table D.

The reactor is a continuous solution polymerization reactor consisting of a liquid full, non-adiabatic, isothermal,

circulating, loop reactor or a continuously stirred tank reactor (CSTR) with heat removal. Independent control of all fresh solvent, monomer, comonomer (if present), hydrogen, and catalyst component feeds is possible. The total fresh feed stream to the reactor (solvent, monomer, comonomer [if present], and hydrogen) is temperature controlled typically between 15-50°C to maintain a single solution phase by passing the feed stream through a heat exchanger. In case of a CSTR the total fresh feed to the polymerization reactor is injected into the bottom of the reactor. In case of a circulating loop reactor the total fresh feed to the polymerization reactor is injected into the reactor at two locations with approximately equal reactor volumes between each injection location. The fresh feed is controlled with each injector receiving half of the total fresh feed mass flow. The catalyst components are injected into the polymerization reactor through one or multiple injection nozzles to introduce the components into the center of the reactor flow. The catalyst component feed is computer controlled to maintain the reactor monomer conversion at the specified values. The cocatalyst component(s) is/are fed based on calculated specified molar ratios to the primary catalyst component. Immediately following each reactor feed injection location, the feed streams are mixed with the circulating polymerization reactor contents with static mixing elements. In case of a CSTR the heat of reaction is partly removed by a cooled jacket. The temperature of the coolant side is responsible for maintaining an isothermal reaction environment at the specified temperature. In case of a circulating loop reactor the contents is continuously circulated through heat exchangers responsible for removing much of the heat of reaction and with the temperature of the coolant side responsible for maintaining an isothermal reaction environment at the specified temperature. Circulation around the reactor loop is provided by a pump.

The reactor effluent enters a zone where it is deactivated with the addition of and reaction with a suitable reagent (water). At this same reactor exit location other additives are added for polymer stabilization (typical antioxidants suitable for stabilization during extrusion and fabrication like Octadecyl 3,5-Di-Tert-Butyl-4-Hydroxyhydrocinnamate, Tetrakis(Methylene(3,5-Di-Tert-Butyl-4-Hydroxyhydrocinnamate))Methane, and Tris(2,4-Di-Tert-Butyl-Phenyl) Phosphite and acid scavenging agents like calcium stearate if needed).

Following catalyst deactivation and additive addition, the reactor effluent enters a devolatization system where the polymer is removed from the non-polymer stream. The isolated polymer melt is pelletized and collected. The non-polymer stream passes through various pieces of equipment which separate most of the ethylene which is removed from the system. Depending on the reactor set-up none or most of the solvent and unreacted comonomer (if present) is recycled back to the reactor after passing through a purification system. A small amount of solvent and comonomer (if present) is purged from the process.

The reactor stream feed data flows that correspond to the values in Table D used to produce the developmental resin, Poly. 2, are graphically described in Figure 1. The data are presented for a reactor set-up without the solvent recycle system is and the reaction system can be treated as a once through flow diagram.

**Table C - Catalyst Components**

| | |
|---|---|
| **Primary Catalyst** | 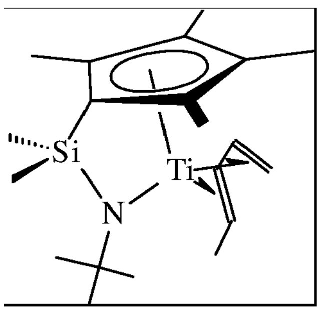 |
| **Co-catalyst A** | Amines, bis(hydrogenated tallow alkyl)methyl, tetrakis(pentafluorophenyl) borate(1-) |
| **Co-catalyst B** | Aluminoxanes, iso-Bu Me, branched, cyclic and linear; modified methyl aluminoxane |

**Table D - Reactor Information**

| | | **Poly 2** |
|---|---|---|
| Reactor Configuration | Type | Single |
| Comonomer type | Type | propylene |
| First Reactor Feed Solvent / Ethylene Mass Flow Ratio | g/g | 5.0 |
| First Reactor Feed Comonomer / Ethylene Mass Flow Ratio | g/g | 0.15 |

(continued)

| | | Poly 2 |
|---|---|---|
| First Reactor Feed Hydrogen / Ethylene Mass Flow Ratio | g/g | 2.01E-05 |
| First Reactor Temperature | °C | 143.4 |
| First Reactor Pressure | barg | 28.0 |
| First Reactor Ethylene Conversion | % | 90.3 |
| First Reactor Catalyst Type | Type | Primary catalyst component 1 |
| First Reactor Co-Catalyst 1 Type | Type | Co-catalyst A |
| First Reactor Co-Catalyst 2 Type | Type | Co-catalyst B |
| First Reactor Co-Catalyst 1 to Catalyst Molar Ratio (B to Catalyst Metal ratio) | mol/mol | 1.2 (B/Ti) |
| First Reactor Co-Catalyst 2 to Catalyst Molar Ratio (Al to Catalyst Metal ratio) | mol/mol | 10.3 (Al/Ti) |
| First Reactor Residence Time | min | 6.15 |

Materials

DOWLEX™ GM 8090, a linear low density polyethylene (LLDPE) having a density of 0.916 g/cc and melt index (12) of 1.0 g/10 min, and commercially available from The Dow Chemical Company (Midland, MI). DOWLEX™ GM 8090 is an ethylene-based polymer as that term is defined herein.

DOW™ LDPE 310E Low Density Polyethylene Resin, a low density polyethylene (LDPE) having a density of 0.923 g/cc and melt index (12) of 0.75 g/10 min, and commercially available from The Dow Chemical Company (Midland, MI). DOW™ LDPE 310E is an ethylene-based polymer as that term is defined herein.

XZ 89507.00, an ethylene-based copolymer having a density of 0.902 g/cc and melt index of 0.85 g/10 min, and commercially available from The Dow Chemical Company (Midland, MI). XZ 89507.00 is an ethylene-based polymer as that term is defined herein.

XUS 39003.00 is an ethylene-propylene copolymer commercially available from The Dow Chemical Company (Midland, MI). XUS 39003.00 comprises 27.1 wt.% propylene comonomer and 72.9 wt.% ethylene monomer and has a density of 0.867 g/cm$^3$, a melt index ($I_2$) of 0.90 g/10 min, a $I_{10}/I_2$ of 10.82, a heat of fusion of 50.24 J/g, and a Mw/Mn of 3.98. XUS 39003.00 is an ethylene-based polymer as that term is defined herein.

VERSIFY™ 2300 Elastomer, a propylene-ethylene elastomer having a density of 0.867 g/cc, and commercially available from The Dow Chemical Company (Midland, MI). VERSIFY™ 2300 Elastomer is not an ethylene-based polymer as that term is defined herein.

AFFINITY™ EG 8100G is an ethylene-octene polyethylene plastomer having a density of 0.870 g/cc and a melt index ($I_2$) of 1.0 g/10 min. AFFINITY™ EG 8100G is commercially available from The Dow Chemical Company (Midland, MI). AFFINITY™ EG 8100G is an ethylene-based polymer as that term is defined herein

AFFINITY™ PL1840 is an ethylene-alpha-olefin having a density of 0.909 g/cc and a melt index ($I_2$) of 1.0 g/10 min. AFFINITY™ PL1840 is commercially available from The Dow Chemical Company (Midland, MI). AFFINITY™ PL1840 is an ethylene-based polymer as that term is defined herein.

Poly. 1 is an ethylene-propylene copolymer having 70 wt.% ethylene monomer, 30 wt.% propylene comonomer, a density of 0.870 g/cc, a melt index (12) of 1.0 g/10 min, a heat of fusion of 47.09 J/g, a Mw/Mn of 2.2, and $I_{10}/I_2$ of 9.4. As can be seen in Figure 2, Poly. 1 has a single peak in an improved comonomer composition distribution (ICCD) elution profile between a temperature range of from 40 to 100°C. Poly. 1 is an ethylene-based polymer as that term is defined herein.

Poly. 2 is an ethylene-propylene copolymer having 92 wt.%, ethylene monomer, 8 wt.% propylene comonomer, a density of 0.910 g/cc, a melt index (12) of 1.0 g/10 min, a heat of fusion of 118.85 J/g, a Mw/Mn of 2.6, and $I_{10}/I_2$ of 13. As can be seen in Figure 2, Poly. 2 has a single peak in an improved comonomer composition distribution (ICCD) elution profile between a temperature range of from 40 to 100°C. Poly. 2 is an ethylene-based polymer as that term is defined herein.

Three-layer and five-layer multilayer films are formed using the materials above. The multilayer films are produced on a Collin coextrusion blown film line, with a Blow-up Ratio (BUR) of 2.5 and a total thickness of 100µm. The Collin coextrusion blown film line is produced by Collin Lab & Pilot Solutions GmbH. The Collin coextrusion blown line

has a Die Diameter = 100mm; Die gap = 2.2mm; Film Width 398 mm; Output = 16-17 kg/hr; and Melt Temperature = 200-230°C. The Collin coextrusion blown film line is configured as shown in Table 1 below to prepare the multilayer films described in Tables 2. The films have a thickness of 100 μm.

**Table 1 - Collin Coextrusion Blown Line Configuration**

| | |
|---|---|
| **Minimum amount for trials** | 32.5 kg per sample |
| **Number of layers** | 9 |
| **Extruders A, D, E, F & I dimensions** | 20 mm / 30 X D |
| **Extruder A, D, E, F & I output** | 2.5 kg/h |
| **Extruder B, C, G & H dimensions** | 25 mm / 30 X D |
| **Extruder B, C, G & H output** | 5 kg/h |
| **Typical working output** | 20 kg/h |
| **Thickness range** | 10 to 250 mic |
| **Die gap** | 1.8 mm |
| **Maximum Haul-off speed** | 30 m/min |
| **Thickness randomizer** | Rotating calender |
| **Maximum layflat** | 500 mm |
| **Surface treatment** | Corona 35 to 45 dynes (maximum film width 450 mm) |

**Table 2 - Structure of Examples**

| Film | Structure | Layer Ratio (A/B/C/B/A) |
|---|---|---|
| Inventive Film 1 | A: 85 wt.% DOWLEX™ GM 8090 + 15 wt.% DOW™ LDPE 310E<br>B: 100 wt.% XZ 89507.00<br>C: 100 wt.% XUS 39003.00 | 20% / 20% / 20% / 20% / 20% |
| Inventive Film 2 | A: 85 wt.% DOWLEX™ GM 8090 + 15 wt.% DOW™ LDPE 310E<br>B: 100 wt.% XZ 89507.00<br>C: 100 wt.% Poly. 1 | 20% / 20% / 20% / 20% / 20% |
| Inventive Film 3 | A: 85 wt.% DOWLEX™ GM 8090 + 15 wt.% DOW™ LDPE 310E<br>B: 100 wt.% XZ 89507.00<br>C: 100 wt.% Poly. 2 | 20% / 20% / 20% / 20% / 20% |
| Inventive Film 3a | A: 85 wt.% DOWLEX™ GM 8090 + 15 wt.% DOW™ LDPE 310E<br>B: 100 wt.% XZ 89507.00<br>C: 100 wt.% XUS 39003.00 | 20% / 25% / 10% / 25% / 20% |
| Inventive Film 4 | A: 85 wt.% DOWLEX™ GM 8090 + 15 wt.% DOW™ LDPE 310E<br>B: 16 wt.% XUS 39003.00 + 84 wt.% XZ 89507.00<br>C: 16 wt.% XUS 39003.00 + 84 wt.% XZ 89507.00 | 20% / 20% / 20% / 20% / 20% |
| Inventive Film 5 | A: 85 wt.% DOWLEX™ GM 8090 + 15 wt.% DOW™ LDPE 310E<br>B: 33 wt.% XUS 39003.00 + 67 wt.% XZ 89507.00<br>C: 33 wt.% XUS 39003.00 + 67 wt.% XZ 89507.00 | 20% / 20% / 20% / 20% / 20% |
| Comparative Film 1 | A: 85 wt.% DOWLEX™ GM 8090 + 15 wt.% DOW™ LDPE 310E<br>B: 100 wt.% XZ 89507.00<br>C: 100 wt.% XZ 89507.00 | 20% / 20% / 20% / 20% / 20% |
| Comparative Film 2 | A: 85 wt.% DOWLEX™ GM 8090 + 15 wt.% DOW™ LDPE 310E | 20% / 20% / 20% / 20% / 20% |

(continued)

| Film | Structure | Layer Ratio (A/B/C/B/A) |
|---|---|---|
| | B: 100 wt.% XZ 89507.00<br>C: 100 wt.% VERSIFY™ 2300 | |
| Comparative Film 3 | A: 85 wt.% DOWLEX™ GM 8090 + 15 wt.% DOW™ LDPE 310E<br>B: 100 wt.% XZ 89507.00<br>C: 100 wt.% AFFINITY™ EG 8100G | 20% / 20% / 20% / 20% / 20% |
| Comparative Film 4 | A: 85 wt.% DOWLEX™ GM 8090 + 15 wt.% DOW™ LDPE 310E<br>B: 100 wt.% XZ 89507.00<br>C: 100 wt.% AFFINITY™ PL 1840 | 20% / 20% / 20% / 20% / 20% |
| Comparative Film 5* | A: 85 wt.% DOWLEX™ GM 8090 + 15 wt.% DOW™ LDPE 310E<br>B: 100 wt.% XUS 39003.00<br>C: 100 wt.% XUS 39003.00<br>D: 100 wt.% XZ 89507.00 | A: 20%<br>B: 20%<br>C: 20%<br>D: 20%<br>E: 20 % |
| | E: 85 wt.% DOWLEX™ GM 8090 + 15 wt.% DOW™ LDPE 310E | |
| Comparative Film 6 | A: 85 wt.% DOWLEX™ GM 8090 + 15 wt.% DOW™ LDPE 310E<br>B: 100 wt.% XUS 39003.00<br>C: 100 wt.% XUS 39003.00 | 20% / 20% / 20% / 20% / 20% |
| Comparative Film 7 | A: 85 wt.% DOWLEX™ GM 8090 + 15 wt.% DOW™ LDPE 310E<br>B: 66 wt.% XUS 39003.00 + 34 wt.% XZ 89507.00<br>C: 66 wt.% XUS 39003.00 + 34 wt.% XZ 89507.00 | |
| *Comparative Film 5 has a A/B/C/D/E structure because the B and D layers (which are equivalent to the two B layers of A/B/C/B/A structure) are different polymer compositions. | | |

Inventive Films 1, 2, 3 and 3a, and Comparative Films 2, 3, 4, and 5 are five layer films. Inventive Films 4 and 5, and Comparative Films 1, 6, and 7 are three layer films because the polymer extruded out of B and C of the structure is the same. The tear resistance in the machine direction (MD) and cross direction (CD) is measured for each of the Comparative and Inventive Films. The results are reported in Table 3 below. As can be seen from the results, the Inventive Films exhibit comparable or improved CD tear resistance and MD tear resistance over the Comparative Films. The Inventive Films include all ethylene-based polymers, which are desirable for polyethylene recycling streams, and include less than 40 wt.% ethylene-propylene copolymer in the core.

**Table 3 - MD and CD Tear Resistance of Examples**

| Ex. | Thickness (μm) | CD Tear Resistance (g) | MD Tear Resistance (g) |
|---|---|---|---|
| Inv. Film 1 | 100 | 2934 | 2391 |
| Inv. Film 2 | 100 | 3192 | 2813 |
| Inv. Film 3 | 100 | 2271 | 1825 |
| Inv. Film 3a | 100 | 3293 | 2997 |
| Comp. Film 2 | 100 | 2622 | 1880 |
| Comp. Film 3 | 100 | 1602 | 1524 |
| Comp. Film 4 | 100 | 1669 | 1299 |
| Comp. Film 5 | 100 | 1517 | 1155 |

(continued)

| Ex. | Thickness ($\mu$m) | CD Tear Resistance (g) | MD Tear Resistance (g) |
|---|---|---|---|
| Inv. Film 4 | 100 | 2037 | 1649 |
| Inv. Film 5 | 100 | 1931 | 1536 |
| Comp. Film 1 | 100 | 1477 | 1322 |
| Comp. Film 6 | 100 | 1261 | 962 |
| Comp. Film 7 | 100 | 1480 | 1016 |

Every document cited herein, if any, including any cross-referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A multilayer film comprising:
   a first outer layer, a second outer layer, and a core, the core comprising one or more core layers; wherein the core is positioned between the first outer layer and the second outer layer; wherein the core comprises greater than 90 wt.% ethylene-based polymers, based on the total polymer weight of the core; and wherein a first core layer comprises an ethylene-propylene copolymer comprising 60 to 95 wt.% of ethylene monomer and 5 to 40 wt.% propylene comonomer, the ethylene-propylene copolymer having a density of from 0.865 to 0.920 g/cc and a melt index ($I_2$) of at least 0.5 g/10 min, and wherein the core comprises less than 40 wt.% ethylene-propylene copolymer, based on total weight of the core.

2. The multilayer film of any preceding claim, wherein the ethylene-propylene copolymer has a molecular weight distribution, Mw/Mn, of from 1.5 to 5.0.

3. The multilayer film of any preceding claim, wherein the ethylene-propylene copolymer has a single peak in an improved comonomer composition distribution (ICCD) elution profile between a temperature range of from 40 to 100°C.

4. The multilayer film of any preceding claim, wherein the ethylene-propylene copolymer has a melt flow ratio, $I_{10}/I_2$, of from 5 to 14.

5. The multilayer film of any preceding claim, wherein the ethylene-propylene copolymer is formed in the presence of a catalyst composition comprising a single-site metallocene catalyst.

6. The multilayer film of any preceding claim, wherein the first core layer comprises from 60 to 100 wt.% of the ethylene-propylene copolymer.

7. The multilayer film of any preceding claim, wherein the first outer layer and the second outer layer comprise a polyethylene having a density less than 0.930 g/cc and a melt index (12) less than 7 g/10 min.

8. The multilayer film of any preceding claim, wherein the core comprises 100 wt.% ethylene-based polymers.

9. The multilayer film of any preceding claim, wherein a thickness of the first core layer is less than 30% of a total

thickness of the multilayer film.

10. The multilayer film of any preceding claim, wherein the multilayer film comprises at least 5 layers including the first outer layer, the second outer layer, the first core layer, a second core layer, and a third core layer, wherein the first core layer is positioned between the second core layer and the third core layer, and the second core layer and the third core layer comprise, separately, a polyethylene having a density less than 0.930 g/cc and a melt index (12) less than 7 g/10 min.

11. The multilayer film of any preceding claim, wherein the core comprises less than 30 wt.% ethylene-propylene copolymer, based on total weight of the core.

12. The multilayer film, wherein the multilayer film comprises at least 95 wt.% ethylene-based polymers, based on total weight of the multilayer film.

FIG. 1 – Single Reactor Data Flow Diagram

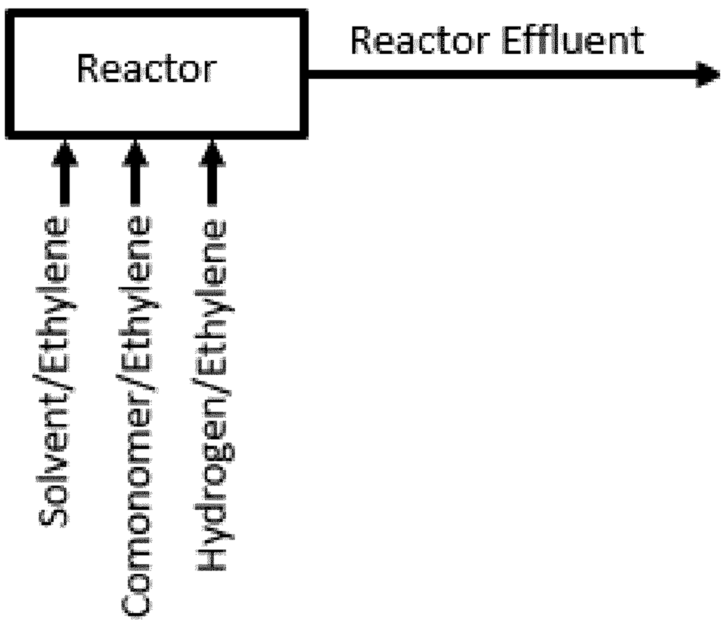

FIG. 2 – ICCD Profile of Poly. 1 (MP762 A) and Poly. 2 (MP780 A)

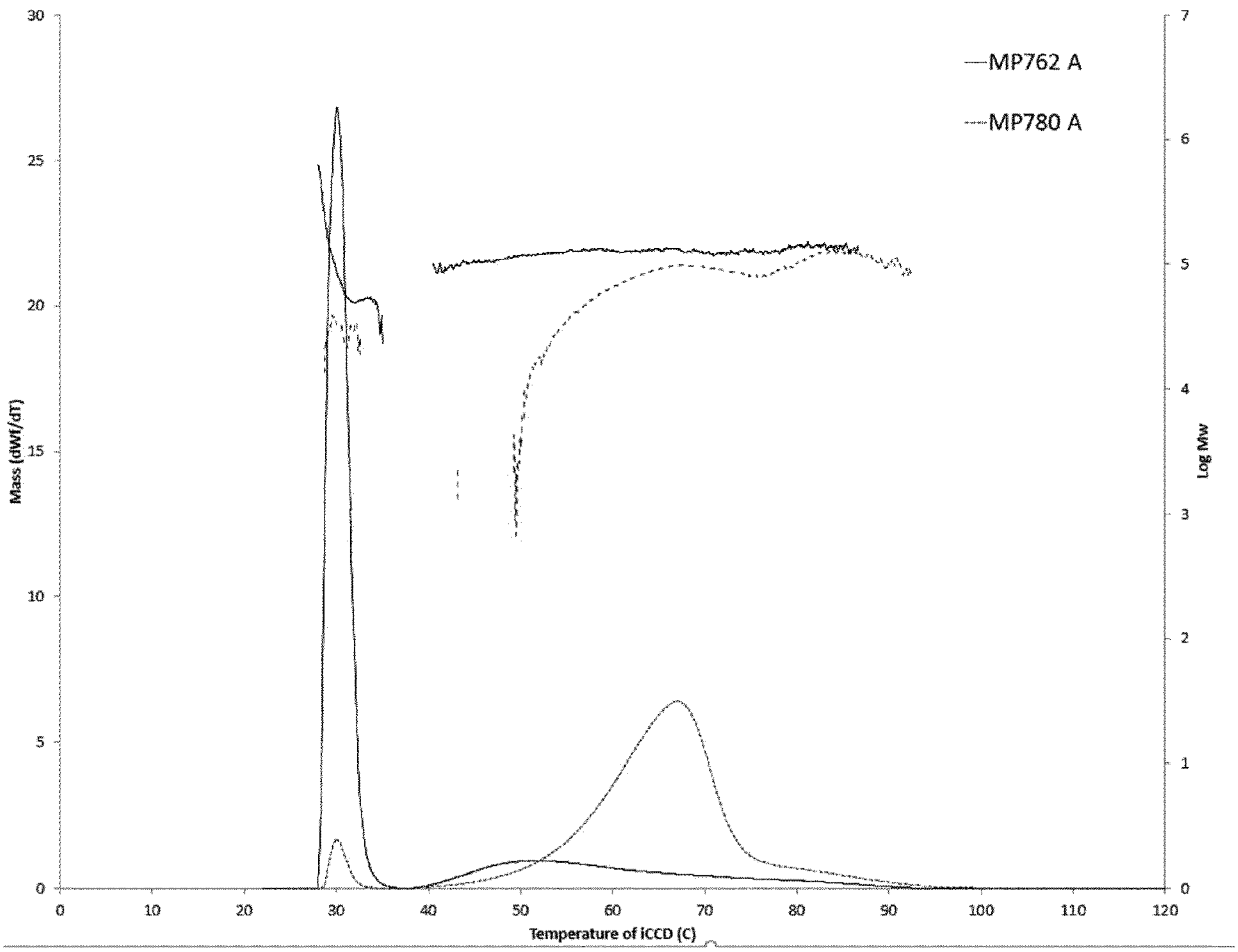

Europäisches Patentamt
European Patent Office
Office européen des brevets

# EUROPEAN SEARCH REPORT

Application Number
EP 22 38 2069

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/026139 A1 (DOW GLOBAL TECHNOLOGIES LLC [US]; DOW QUIM DE COLOMBIA S A [CO]) 11 February 2021 (2021-02-11)<br>* the whole document *<br>----- | 1-12 | INV.<br>B32B27/08<br>B32B27/30<br>B32B27/32<br>C08J5/18<br>C08L23/04 |
| A | JP H06 115027 A (OKURA INDUSTRIAL CO LTD) 26 April 1994 (1994-04-26)<br>* the whole document *<br>----- | 1-12 | |
| A | WO 2020/219378 A1 (DOW GLOBAL TECHNOLOGIES LLC [US]) 29 October 2020 (2020-10-29)<br>* abstract; claims 1-10 *<br>----- | 1-12 | |
| A | WO 2009/110887 A1 (EXXONMOBIL CHEM PATENTS INC [US]; GERMAN PAUL M [US] ET AL.) 11 September 2009 (2009-09-11)<br>* abstract; claims 1-25 *<br>----- | 1-12 | |
| | | | TECHNICAL FIELDS SEARCHED (IPC) |
| | | | B32B<br>C08J<br>C08L |

The present search report has been drawn up for all claims

1

| Place of search | Date of completion of the search | Examiner |
|---|---|---|
| The Hague | 14 June 2022 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 38 2069

This annex lists the patent family members relating to the patent documents cited in the above-mentioned European search report. The members are as contained in the European Patent Office EDP file on The European Patent Office is in no way liable for these particulars which are merely given for the purpose of information.

14-06-2022

| Patent document cited in search report | Publication date | Patent family member(s) | Publication date |
|---|---|---|---|
| WO 2021026139 A1 | 11-02-2021 | BR 112022001979 A2 | 10-05-2022 |
| | | CA 3146305 A1 | 11-02-2021 |
| | | CN 114206614 A | 18-03-2022 |
| | | EP 4010190 A1 | 15-06-2022 |
| | | WO 2021026139 A1 | 11-02-2021 |
| JP H06115027 A | 26-04-1994 | JP 3096350 B2 | 10-10-2000 |
| | | JP H06115027 A | 26-04-1994 |
| WO 2020219378 A1 | 29-10-2020 | AR 118648 A1 | 20-10-2021 |
| | | CA 3136166 A1 | 29-10-2020 |
| | | CN 113613903 A | 05-11-2021 |
| | | EP 3959075 A1 | 02-03-2022 |
| | | WO 2020219378 A1 | 29-10-2020 |
| WO 2009110887 A1 | 11-09-2009 | US 2010310892 A1 | 09-12-2010 |
| | | WO 2009110887 A1 | 11-09-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4599392 A
- US 5272236 A
- US 5278272 A
- US 5582923 A
- US 5733155 A
- US 3645992 A
- US 4076698 A
- US 3914342 A
- US 5854045 A
- US 7498282 B
- WO 2017040127 A1, Cong and Parrott
- US 9688795 B, Cerk and Cong


### Non-patent literature cited in the description


- **WILLIAMS ; WARD.** *J. Polym. Sci., Polym. Let.,* 1968, vol. 6, 621
- **MOUREY ; BALKE.** Chromatography Polym. 1992
- **BALKE ; THITIRATSAKUL ; LEW ; CHEUNG ; MOUREY.** *Chromatography Polym.,* 1992
- **ZIMM, B.H.** *J. Chem. Phys.,* 1948, vol. 16, 1099
- **KRATOCHVIL, P.** Classical Light Scattering from Polymer Solutions. Elsevier, 1987
- Thermal Characterization of Polymeric Materials. Academic Press, 1981